# EUROPEAN PATENT SPECIFICATION

(11) **EP 3 544 253 B1**
(45) Date of publication and mention of the grant of the patent: **20.05.2020**
(21) Application number: 18163602.8
(22) Date of filing: 23.03.2018
(51) Int. Cl.: H04L 29/06, H04L 12/26

(54) **ACQUISITION OF FILES FROM AN SRTP-STREAM**
ERFASSUNG VON DATEIEN AUS EINEM SRTP-STROM
ACQUISITION DE FICHIERS PROVENANT D'UN FLUX SRTP

(43) Date of publication of application: 25.09.2019
(73) Proprietor: Deutsche Telekom AG, 53113 Bonn (DE)
(72) Inventor: MESZAROS, Martin, 04107 Leipzig (DE); TROJAHN, Franziska, 04277 Leipzig (DE); MARUSCHKE, Michael, 04275 Leipzig (DE)
(74) Representative: Vossius & Partner Patentanwälte Rechtsanwälte mbB

(56) References cited:
- US-A1- 2016 134 659
- US-A1- 2017 054 769

## Description

The invention refers to acquiring means for acquiring files containing degraded audio signals from a Secure Real-Time Transport Protocol (SRTP) -stream, the files being acquired for an objective audio quality assessment method, wherein traffic with the SRTP stream is transmitted during a successfully established Web Real-Time Communication (WebRTC) audio media call between at least two WebRTC endpoints and transmitted by at least one network element different from the WebRTC endpoints via a WebRTC audio media transmission path according to independent claim 1. The invention also refers to a system, according to independent claim 6, comprising the acquiring means and a method, according to independent claim 8, for acquiring files containing degraded audio signals from the SRTP-stream.

Actually, WebRTC is standardized by two major standardization bodies where the World Wide Web Consortium (W3C) is responsible for the JavaScript Application Programming Interface (API) and the Internet Engineering Task Force (IETF), and in particular for the corresponding protocols. WebRTC enables Internet Protocol (IP) and browser-based real-time communication using audio, video and auxiliary data without the necessity of additional plugins or software installation. Merely a browser that follows specifications of the WebRTC protocol and implements the JavaScript API, defined by the W3C, is necessary. In some cases, WebRTC native application, so called "non-browsers", are preferable over WebRTC browsers. These WebRTC non-browsers do not need to implement the JavaScript API, but must comply with the specifications of the WebRTC protocol.

During a successfully established WebRTC audio media call between at least two WebRTC endpoints data traffic is transmitted via a network between the WebRTC endpoints. However, when transmission of data traffic is impaired, it is difficult to determine at which segment or segments in the network the data traffic is disturbed and why transmission of data traffic is disturbed, there.
US 2017/0054769 A1 discloses call recording of WebRTC communications at a network edge.
US 2016/0134659 A1 discloses inspection of data channels and recording of media streams in networks using WebRTC.

Accordingly, an object of the present invention is to provide means and a method which allow determining at which segment or segments in the network data traffic is disturbed. The invention is defined by the independent claims. Dependent claims refer to preferred embodiments.

According to the invention, there is provided acquiring means comprising receiving means for receiving information about the WebRTC endpoints and/or reference information, wherein the information about the WebRTC endpoints and/or the reference information comprises at least one of: an encryption key, a cipher suite, a Session Description Protocol (SDP)-message; reading means for reading at least one audio stream from at least one previously captured SRTP traffic file, wherein the at least one previously captured SRTP traffic file containing the at least one audio stream is captured from at least one previous WebRTC audio media call; parsing means for parsing the information about the WebRTC endpoints and/or the reference information; filtering means for receiving traffic and for filtering an SRTP stream from the traffic, wherein the filtering means is configured to filter the SRTP stream according to a Synchronization Source (SSRC) identifier obtained from the information about the WebRTC endpoints and/or the reference information, particularly from the at least one SDP message, and according to a simulation of behavior of a jitter buffer of a WebRTC receiving endpoint of the at least two WebRTC endpoints; decryption means for performing SRTP decryption with the encryption key and/or the cipher suite in order to generate decrypted Real-Time Transport Protocol (RTP) packets; extracting means for extracting RTP payload from the decrypted RTP packets, wherein the RTP payload contains an encoded, degraded audio signal; decoding means for decoding the encoded, degraded audio signal, wherein the decoding means comprises an audio decoder configured to produce decoded Pulse Code Modulation (PCM) -audio streams; preparing means for preparing the decoded PCM audio streams according to requirements of an objective audio quality assessment method, wherein the preparing means is configured to split the decoded PCM audio streams into multiple decoded PCM audio samples; output means for outputting at least one decoded PCM audio sample of the multiple decoded PCM audio samples in a file format, wherein the file format is appropriate to the requirements of the objective audio quality assessment method.

According to the invention a system is also provided for acquiring files containing degraded audio signals from an SRTP -stream, the files being acquired for an objective audio quality assessment method; the system comprising at least two end points, wherein the at least two endpoints are network elements of a network, wherein the endpoints are configured to be used as WebRTC end points, wherein the endpoints are configured to transmit traffic, comprising SRTP streams, during a successfully established WebRTC audio media call, wherein the SRTP streams are transmitted via a WebRTC audio media transmission path between a sending endpoint of the at least two endpoints and a receiving endpoint of the at least two endpoints; at least one further network element, wherein the at least one further network element is configured to transmit the SRTP stream of the WebRTC audio media call, wherein the at least one further network element is located at the WebRTC audio media transmission path; the system comprising acquiring means, the acquiring means comprising receiving means for receiving information about the endpoints and/or reference information, wherein the information about the endpoints and/or the reference information comprises at least one of: an encryption key, a cipher suite, an SDP message; reading means for reading at least one previously captured audio stream, wherein the at least one previously captured audio stream is captured from at least one previous WebRTC audio media call; parsing means for parsing the information about the endpoints and/or the reference information; filtering means for receiving traffic and for filtering an SRTP stream from the traffic, wherein the filtering means is configured to filter the SRTP stream according to a SSRC identifier obtained from the information about the endpoints and/or the reference information, particularly from the at least one SDP message, and according to a simulation of behavior of a jitter buffer of the receiving endpoint; decryption means for performing SRTP decryption with the encryption key and the cipher suite in order to generate decrypted RTP packets; extracting means for extracting RTP payload from the decrypted RTP packets, wherein the RTP payload contains an encoded, degraded audio signal; decoding means for decoding the encoded, degraded audio signal, wherein the decoding means comprises an audio decoder configured to produce decoded PCM audio streams; preparing means for preparing the decoded PCM audio streams according to requirements of an objective audio quality assessment method, wherein the preparing means is configured to decode the PCM audio streams into multiple decoded PCM audio samples; output means for outputting at least one decoded PCM audio sample of the multiple decoded PCM audio samples in a file format, wherein the file format is appropriate to the requirements of the objective audio quality assessment method.

According to the invention a method is also provided for acquiring files containing degraded audio signals from an SRTP stream, the files being acquired for an objective audio quality assessment method; wherein traffic with the SRTP stream is transmitted during a successfully established WebRTC audio media call between at least two WebRTC endpoints and transmitted by at least one network element different from the WebRTC endpoints via a WebRTC audio media transmission path; the method comprising receiving information about the WebRTC endpoints and/or reference information, wherein the information about the WebRTC endpoints and/or the reference information comprises at least one of: an encryption key, a cipher suite, an SDP message; reading at least one previously captured audio stream, wherein the at least one previously captured audio stream is captured from at least one previous WebRTC audio media call; parsing the information about the WebRTC endpoints and/or the reference information; receiving traffic and filtering SRTP stream from the traffic, wherein the filtering comprises filtering the SRTP stream according to a SSRC identifier obtained from the information about the WebRTC endpoints and/or the reference information, particularly from the at least one SDP message, and according to a simulation of behavior of a jitter buffer of a WebRTC receiving endpoint of the at least two WebRTC endpoints; performing SRTP decryption with the encryption key and the cipher suite in order to generate decrypted RTP packets; extracting RTP payload from the decrypted RTP packets, wherein the RTP payload contains an encoded, degraded audio signal; decoding the encoded, degraded audio signal, wherein decoding comprises producing decoded PCM audio streams; preparing the decoded PCM audio streams according to requirements of an objective audio quality assessment method, wherein the preparing comprises splitting the decoded PCM audio streams into multiple decoded PCM audio samples; outputting at least one decoded PCM audio sample of the multiple decoded PCM audio samples in a file format, wherein the file format is appropriate to the requirements of the objective audio quality assessment method.

The acquiring means, system and method according to the invention allow encrypted audio streams of a WebRTC call, utilizing SRTP, to be preprocessed such that quality of transmitted audio files comprised by the streams can be determined by objective audio assessment. The invention can be adapted to different quality assessment methods, such as Perceptual Evaluation of Speech Quality (PESQ), Perceptual Objective Listening Quality Assessment (POLQA) and ITU-Telecommunication Standardization Sector (ITU-T) recommendation P.563 (05/2004) including Erratum 1 (10/2007).

The invention is independent of the device and platform, such as operating system or WebRTC implementation, on the receiving endpoint. The invention can be adapted to various audio codecs, too. Particularly, it is provided that a standalone decoder is available for adapting the invention to the different audio codecs.

The invention further allows assessing the audio quality at different network segments within the whole network transmission path including the receiving endpoint. The invention particularly allows acquiring data being captured from different points of the network.

Furthermore, due to the invention, additional degradations due to Analog to Digital Conversion (ADC) and Digital to Analog Conversion (DAC), which may be introduced by the capturing method, as well as perturbations, such as interferences through radio waves, do not occur.

Thus, by providing audio files to objective audio assessment from any position of the network, provided that the audio file was sent from a WebRTC sending endpoint of the at least two endpoints, the invention allows determining the segment or the segments in the network at which the data traffic is disturbed.

Preferably, the behavior of the WebRTC endpoint, more particularly of the jitter buffer, comprises behavior of packet reordering and/or packet timeout and/or playout behavior.

Preferably, the traffic is received from the at least one network element different from the WebRTC endpoints. Alternatively or in addition, the traffic is received from a capturing tool in the receiving endpoint, e.g. the capturing tool being/using Wireshark or tcpdump. Preferably, the at least one network element is a network node.

Preferably, the preparing means is configured to split the decoded PCM audio streams such that a length of each of the at least one degraded PCM audio sample corresponds to a length of a reference audio file being sent from the WebRTC sending end point. For example, audio samples with sound may be identified by detecting sequences of silence of a certain length in an audio stream, and split the audio stream at a corresponding point, e.g. such that the sequences of silences are separated from the sequences with sound.

### BRIEF DESCRIPTION OF DRAWINGS

- FIG. 1: shows a first exemplary embodiment of the present invention,
- FIG. 2: shows a second exemplary embodiment of the present invention,
- FIG. 3: shows a third exemplary embodiment of the present invention,
- FIG. 4: shows a fourth exemplary embodiment of the present invention,
- FIG. 5: is a schematic view of an exemplary WebRTC architecture, and
- FIG. 6: is a schematic view of a WebRTC endpoint with Java Script API and RTC functioning.

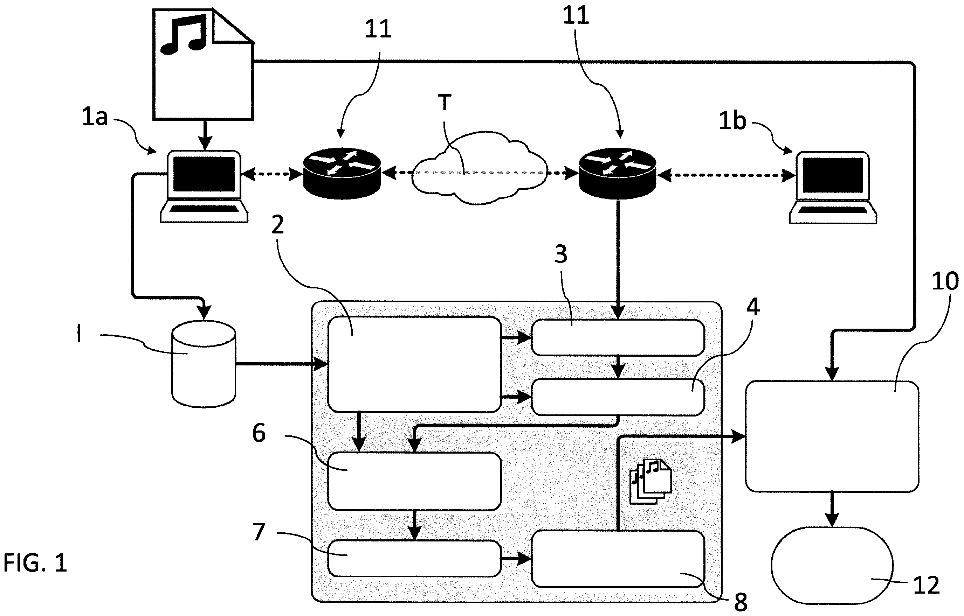

Figure 1 shows a first exemplary embodiment of the present invention. It illustrates the acquisition of degraded audio samples by capturing the network traffic at a network node 11, e.g. a router, in-between the transmission path T with subsequent full-reference quality assessment using Perceptual Objective Listening Quality Analysis (POLQA) as described in the T-REC P.863 of the ITU-T of September 2014.

In the embodiment shown in Figure 1, the network node 11 from which the network traffic is captured is close to the receiving endpoint 1b. However, it is understood by the skilled person that the present invention is not limited to this and the network node 11 can be at any other place of the network transmission path T. Acquiring the data traffic from the network node 11 in the transmission path T is especially useful, if traffic capturing is not possible or feasible to be performed by the WebRTC receiving endpoint 1b or if the quality of the endpoint, as if it was located at the capturing node, is of interest.

The capturing of the traffic is ideally established before the call is set up and should last until the call is terminated.

In this embodiment, the traffic may be preferably captured in the transmission path T using a switch with a mirroring port functionality. The switch may be or may not be comprised in the network node 11. Port mirroring is used on the network switch to send a copy of network packets transmitted via one switch port or an entire Virtual Local Area Network (VLAN) to a network monitoring connection on another switch port. The traffic has to be captured with a third device connected to the mirroring port.

For this but also for the other embodiments of the present invention, it has to be ensured, that devices for capturing data traffic have enough processing power to handle the traffic including the SRTP stream of the call as well as the capturing simultaneously in order to prevent negative effects, such as packet loss.

After a capturing process is started, a WebRTC call is established. During the call, a reference audio file is injected into the WebRTC sending endpoint 1a, where it can be looped in order to provide several test samples during one call. Thereafter, the reference audio file is encoded and transmitted over the network by the WebRTC sending endpoint 1a, whilst at the same time the traffic is captured at the network node 11. After the call has finished, logged reference information is provided to the parsing means 2 and the captured traffic is provided to the filtering means 3. Particularly, the WebRTC sending endpoint 1a provides reference information. However, it is understood by the skilled person that the present invention is not limited to this. In particular, the reference information can be received from the receiving endpoint 1b.

The acquiring means is suitable for acquiring files containing degraded audio signals from the captured SRTP-stream. The acquiring means comprises receiving means (not being depicted) for receiving WebRTC endpoint and/or reference information I, wherein the information about the WebRTC endpoints 1a, 1b and/or the reference information comprises at least one of: an encryption key, a cipher suite, a Session Description Protocol (SDP) -message.

The acquiring means further comprises reading means (not depicted) for reading at least one audio stream from at least one previously captured SRTP traffic file, wherein the at least one previously captured SRTP traffic file containing the at least one audio stream is captured from at least one previous WebRTC audio media call.

According to the present embodiment as shown in Figure 1, the encryption key, cipher suite and Session Description Protocol (SDP) messages is obtained from the WebRTC endpoint 1a, i.e. the sending endpoint.

The acquiring means further comprises parsing means 2 for parsing the information about the WebRTC endpoints 1a and/or 1b given by the reference information and filtering means 3 for receiving the captured traffic from the network node 11 and for filtering the SRTP stream from the traffic. The filtering means 3 is configured to filter the SRTP stream according to a Synchronization Source (SSRC) identifier obtained from the information about the WebRTC endpoints 1a, 1b and/or the reference information, particularly from the at least one SDP message, and according to a simulation of behavior of a jitter buffer of the WebRTC receiving endpoint 1b.

Particularly, a traffic filtering function of the filtering means 3 is configured to filter the SRTP stream from the traffic, which was transmitted from the WebRTC sending endpoint 1a to the WebRTC receiving endpoint 1b, according to information acquired from the SDP message by an information parsing function. The information used for filtering the SRTP stream may be the SSRC identifier of the SRTP stream obtained by the information parsing function from the at least one SDP message. Additionally, traffic filtering particularly incorporates the jitter buffer, wherein the functionality of the jitter buffer, e.g., resembles a jitter buffer functionality of the WebRTC receiving endpoint 1b.

The acquiring means also comprises decryption means 4 for performing SRTP decryption with the encryption key and/or the cipher suite in order to generate decrypted Real-Time Transport Protocol (RTP) packets and extracting means 6 for extracting RTP payload from the decrypted RTP packets, wherein the RTP payload contains an encoded, degraded audio signal.

Particularly, the filtered SRTP stream is provided to an SRTP decryption function of the decryption means 4, which uses the key and cipher suite to decrypt the SRTP stream and produce an RTP stream corresponding to the decrypted RTP packets.

Furthermore, the acquiring means comprises decoding means 7 for decoding the encoded, degraded audio signal, wherein the decoding means 7 comprises an audio decoder configured to produce decoded Pulse Code Modulation (PCM) -audio streams.

Particularly, an encoded audio stream corresponding to the encoded, degraded audio signal is decoded using an audio decoding function of the decoding means 7. In the case that a reference audio file is looped throughout the communication session by the WebRTC sending endpoint 1 a, an output of the Audio decoding function may be a concatenation of degraded audio files.

The acquiring means comprises preparing means 8 for preparing the decoded PCM audio streams according to requirements of an objective audio quality assessment method, wherein the preparing means 8 is configured to split the decoded PCM audio streams into multiple decoded PCM audio samples.

For example in the case of a concatenation of audio samples, the concatenation may be split into multiple degraded audio samples such that at least one of the degraded samples has the same length as a reference audio file. Splitting is accomplished by an audio manipulation function of the preparing means 8, which produces multiple degraded samples. In other words, the preparing means 8 is configured to split the decoded PCM audio streams such that a length of each of the at least one degraded PCM audio sample corresponds to a length of the reference audio file being sent from the WebRTC sending end point 1a.

The acquiring means also comprises output means (not depicted) for outputting at least one decoded PCM audio sample of the multiple decoded PCM audio samples in a file format, wherein the file format is appropriate to the requirements of the objective audio quality assessment method applied by an assessment means 10.

For example, the assessment means 10 may utilize the full reference quality assessment method POLQA in order to produce Mean Opinion Score (MOS)-Listening Quality Objective - Super-Wideband (LQOsw) values 12.

Particularly, the behavior of the WebRTC endpoint 1b, more particularly of the jitter buffer, comprises behavior of packet reordering and/or packet timeout and/or playout behavior.

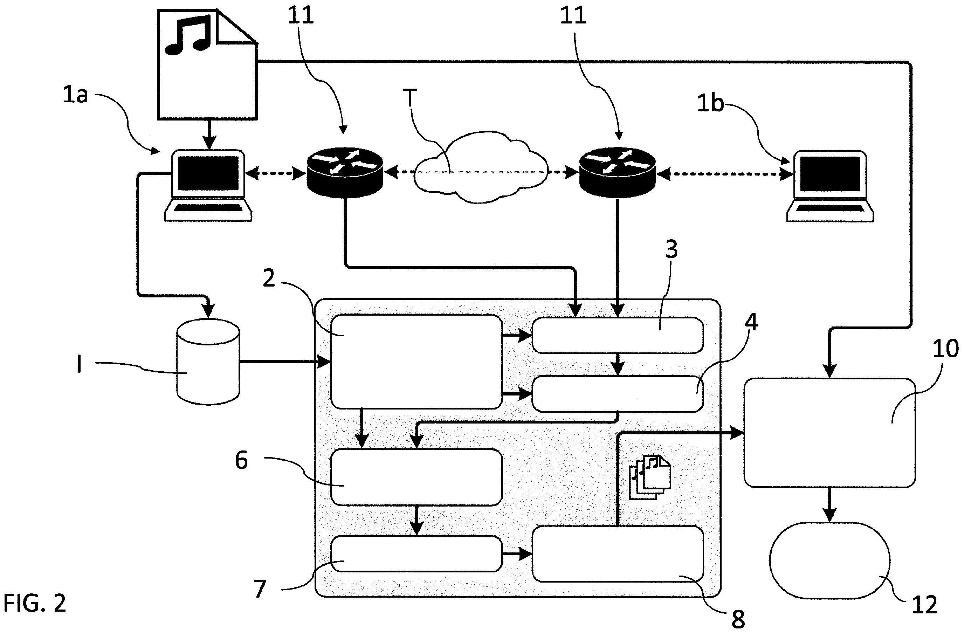

Figure 2 shows a second exemplary embodiment where the traffic is captured at two network elements, i.e. a network node 11 closer to the sending endpoint 1a and a network node 11 closer to the receiving endpoint 1b. However, it is understood that the number of network elements is not limited to the number of two but the traffic may also be captured at more than two network elements.

The SRTP stream is sent from the WebRTC sending endpoint 1a to the receiving endpoint 1b. The traffic is captured at the first network node closer to the sending endpoint 1a and processed as in the first exemplary embodiment. The corresponding traffic of the same call is also captured at the second network node closer to the receiving endpoint 1b and also processed as in the first exemplary embodiment. Thus, the degraded audio samples can be acquired from the captured traffic at different points of the transmission path T, so that a quality assessment of a single WebRTC call from different positions at the transmission path T can be conducted. This would help identifying network segments that have the biggest influence on the quality.

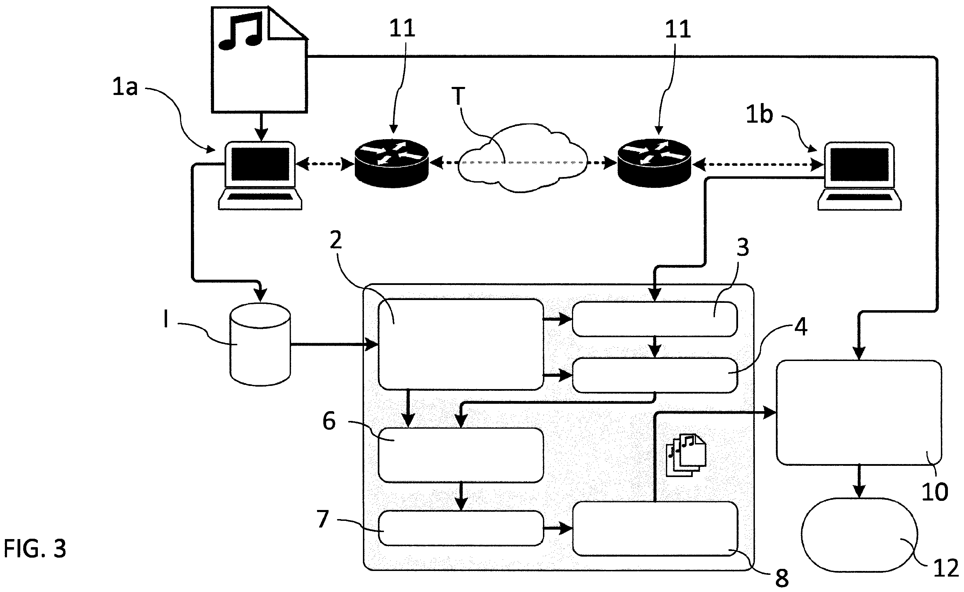

Figure 3 shows a third exemplary embodiment of the present invention. The main difference to the first embodiment and the second embodiment is that the quality is assessed as perceived at endpoint 1b. In other words, the degraded audio signals are acquired by capturing the traffic at the WebRTC receiving endpoint 1b. According to this embodiment, a capturing tool within the endpoint 1b can be used, e.g. Wireshark or tcpdump, for capturing the traffic including the SRTP stream. The captured traffic is then sent to the acquiring means and subsequent processing of the captured traffic and the traffic filtering is performed as in the first embodiment. With the embodiment as shown in Figure 3, the whole path can be assessed, i.e. up to the receiving endpoint. It is understood to the skilled person that the capturing at the receiving endpoint 1b can be combined with the capturing and processing shown in the first and second embodiments.

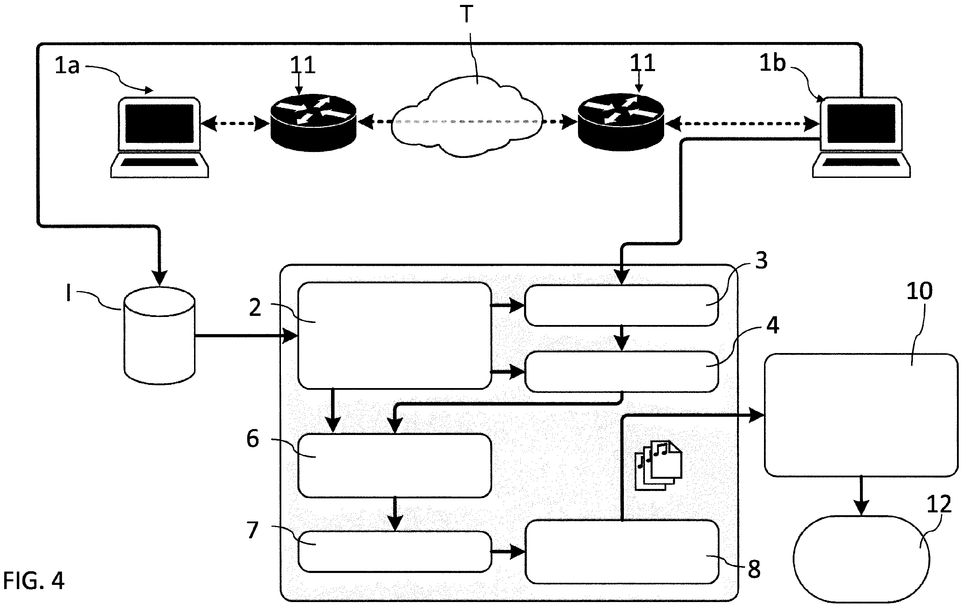

Figure 4 shows a fourth embodiment of the present invention. In said embodiment, the acquisition of degraded audio samples is performed by capturing the network traffic at the receiving endpoint with subsequent single-ended quality assessment, e.g. using ITU-T P.563 in order to produce Mean Opinion Score (MOS)-Listening Quality Objective (LQO) values 12. In this embodiment the audio quality can be assessed without a reference sample. Thus, this quality assessment is also called no-reference quality assessment. In particular, no reference audio file has to be injected into the sending endpoint 1a. In the embodiment shown in Figure 4, the reference information is received from the receiving endpoint 1b. In addition, according to this embodiment, the traffic is captured at the receiving endpoint 1b using a capturing tool. However, it is understood by the skilled person that the invention is not limited to this. In particular, capturing the traffic at one or more network elements, e.g. network nodes 11, as illustrated in Figures 1 and 2 are possible.

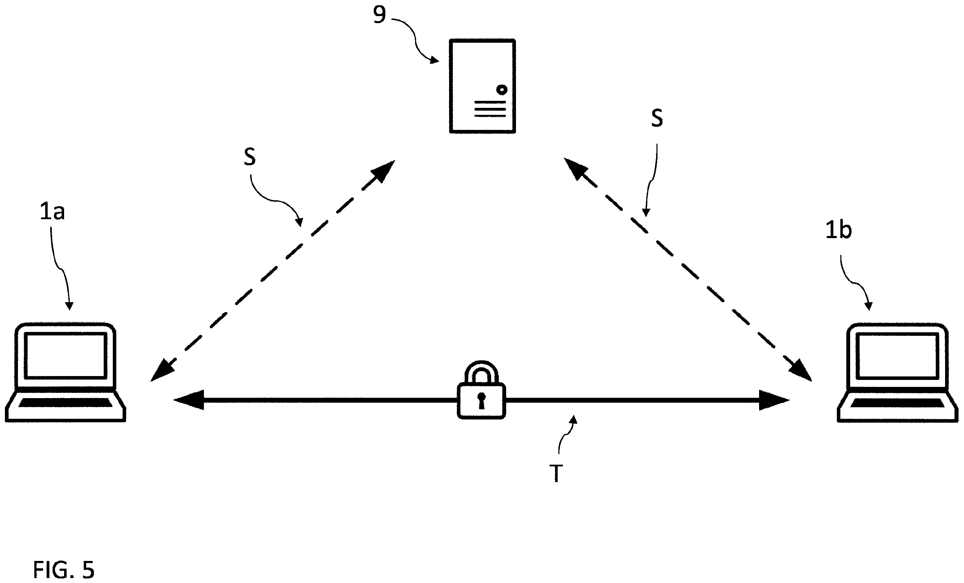

Figure 5 shows a conceptual view of a WebRTC architecture. The architecture comprises two communication paths which are signaling paths S between a web- / signaling server 9 or servers and each client and the transmission path T, which is a WebRTC audio media transmission path in the present case, for transmitting data traffic between communication parties using the clients.

The web and signaling servers 9 provide a web application which can be downloaded by the client. The web and signaling servers 9 control the WebRTC connection management, through the exchange of signaling messages, between the clients and the web and signaling servers 9. For establishing the transmission path T for the data traffic, signaling protocols are applied. The signaling protocols are not standardized. Various protocols, including standards-based or proprietary ones, for example protocols provided by the servers, can be used. The WebRTC media negotiations are capable of representing the SDP offer/answer semantics according to RFC 3264.

The clients in a WebRTC call are the WebRTC endpoints 1a, 1b. Via the transmission path T, the data traffic with the SRTP streams is transmitted during a successfully established Web Real-Time Communication (WebRTC) audio media call between the at least two WebRTC endpoints 1a, 1b. The traffic is transmitted by at least one network element (not depicted) different from the WebRTC endpoints 1a, 1b via the WebRTC audio media transmission path.

The WebRTC endpoints 1a, 1b can be either WebRTC browsers or WebRTC non-browsers. Usually, in the case of a Peer-to-Peer (P2P) connection, the transmission path T is directly established between the two WebRTC endpoints 1a, 1b. It also may be possible, for example when symmetric Network Address Translation (NAT) is used, that the traffic may be relayed through a Traversal Using Relays around NAT (TURN) server. In both cases, data traffic will be transmitted via a Secure Real-Time Transport Protocol (SRTP) for every channel of the transmission path T that is established. This means, that data to be transmitted via the transmission path T is encrypted. Therefore, a cipher suite including a key exchange mechanism is necessary for SRTP.

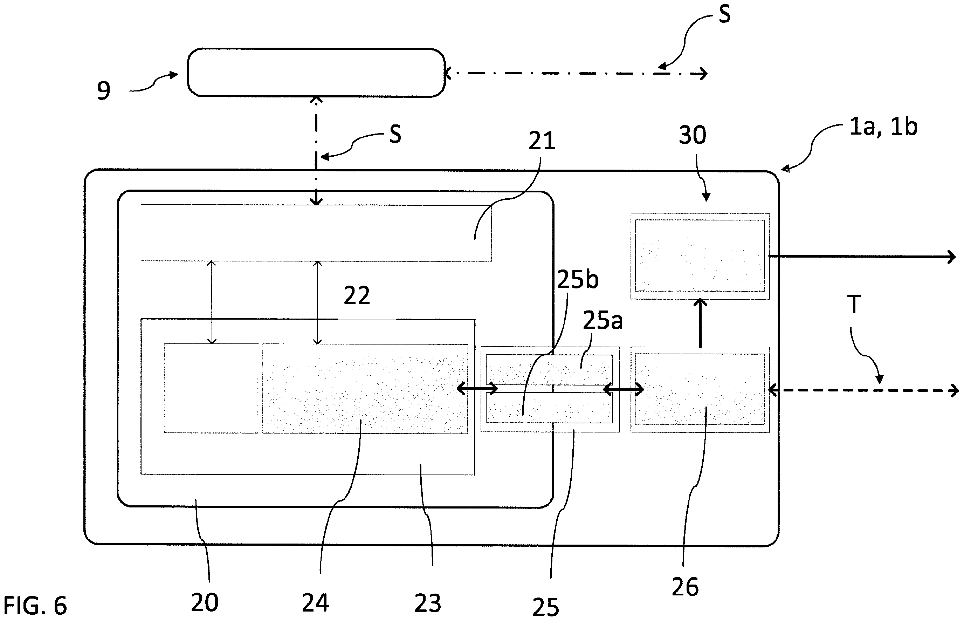

In Figure 6, the WebRTC endpoint 1a, 1b is depicted in a WebRTC call context. The WebRTC endpoint 1a, 1b comprises a WebRTC client 20. The WebRTC client 20 comprises at least one Web application 21, such as JavaScript, HTML and Cascading Style Sheets (CSS), Application Programming Interfaces (APIs), and at least one browser 23 including browser functions, such as a browser Real Time Communication (RTC) function 24. The browser RTC function 24 includes an engine for transport, video and voice. The Application Programming Interfaces (APIs) include, e.g., WebRTC APIs, such as WebRTC JavaScript APIs 22. It is clear for the skilled person that the present invention is not limited to browser based WebRTC clients/RTC clients. Also WebRTC/RTC clients which are otherwise implemented, e.g. as standalone applications or embedded applications of an operating system can be used in accordance with the present invention.

The web and signaling server 9 (see also Figure 5) provides a web application including a JavaScript code for signaling functionalities. The Web application 21 and the Web and signaling server 9 communicate via the signaling path S, e.g. via Hypertext Transfer Protocol (HTTP). The JavaScript API allows the browser 23 to interact with media devices and functions, such as microphone, camera, loud speakers or audio and video codecs.

The WebRTC endpoint 1a, 1b comprises APIs 25 for network input/output (I/O) 25a of the WebRTC endpoint 1a, 1b and audio as well as video capturing (AV-Capture) 25b. A Hardware Abstraction Layer (HAL) 26 isolates a software layer of an operating system (OS) from hardware of the WebRTC endpoint 1a, 1b. For WebRTC applications, the codecs G.711 referring to Pulse code modulation (PCM) of voice frequencies (including versions of G.711 (11/88), Amendment 1 (08/09), Amendment 2 (11/09), Appendix I (09/99) and Appendix II (02/00) of the ITU) and Opus (corresponding to IETF RFC 6716) are used.

Particularly, a multi-functional Fullband (FB)-codec Opus is used as default audio codec. The Opus codec can adapt to multiple use cases in regard to, for example, bitrates, frequency ranges or a number of channels. The Opus codec allows speech as well as music coding. It supports all relevant audio bandwidths from Narrowband (NB) to FB with delay times from 5 ms to 66.5 ms. Thus, the Opus codec is capable of low-delay speech as well as high-quality music coding including multichannel music.

For assessment of WebRTC-based audio calls, several objective quality assessment methods can be utilized. The objective quality assessment method may be a full reference, reduced reference or no reference quality assessment method. Full reference methods compare a degraded audio signal with a high quality reference audio signal in order to determine a quality rating. An example for full reference quality assessment is Perceptual Objective Listening Quality Analysis (POLQA) (corresponding to ITU-T Rec. P.863 (09/14), including the implementer's Guides P.Imp 863 (01/16)), which calculates MOS-Listening Quality Objective (LQO) on a 5-point scale. Reduced reference and no reference methods do not need a high quality reference audio signal, but if the assessment method is signal-based, the degraded audio signal must also be available. The no reference method is referred to as single-ended above.

The acquiring method according to the invention provides degraded audio files for signal-based assessment methods. Therefore, for the acquiring of degraded audio files according to the invention, audio streams being transmitted during a WebRTC-based audio call, may be captured by capturing means 30 (see Figure 6) at a position being close to the receiving endpoint and/or at the receiving endpoint, but outside of the WebRTC Client 20 and/or or at another measurement point in the network which is between the WebRTC endpoints 1a, 1b.

The invention also refers to a method for acquiring files containing degraded audio signals from the SRTP stream, wherein the files are acquired for the objective audio quality assessment method, wherein the method according to the invention comprises method steps according to features of the before-described acquiring means and/or the before-described system.

### REFERENCE SIGNS LIST

- 1a: WebRTC sending endpoint
- 1b: WebRTC sending endpoint
- 2: parsing means
- 3: filtering means
- 4: decryption means
- 6: payload extraction means
- 7: decoding means
- 8: preparing means
- 9: Web and signaling server
- 10: objective audio quality assessing means
- 11: network node
- 12: MOS LQO
- 20: WebRTC Client
- 21: Web application
- 22: WebRTC-JavaScript APIs
- 23: browser
- 24: browser RTC function
- 25: operating system
- 25a: network input/output
- 25b: video capturing
- 26: Hardware Abstraction Layer
- 30: capturing means
- I: WebRTC endpoint and/or reference information
- S: signaling path
- T: transmission path

## Claims

1. Acquiring means for acquiring files containing degraded audio signals from a Secure Real-Time Transport Protocol, SRTP, -stream, the files being acquired for an objective audio quality assessment method,
wherein traffic with the SRTP stream is transmitted during a successfully established Web Real-Time Communication, WebRTC, audio media call between at least two WebRTC endpoints (1a, 1b),
wherein the at least two WebRTC endpoints (1a, 1b) are network elements of a network,
wherein the SRTP stream is transmitted via a WebRTC audio media transmission path (T) between a sending endpoint of the at least two WebRTC endpoints (1a, 1b) and a receiving endpoint of the at least two WebRTC endpoints (1a, 1b);
at least one further network element (11) different from the WebRTC endpoints (1a, 1b),
wherein the at least one further network element (11) is located at the WebRTC audio media transmission path (T),
wherein the traffic is transmitted by the at least one further network element (11) via the WebRTC audio media transmission path (T); the acquiring means comprising:
receiving means for receiving information about the WebRTC endpoints (1a, 1b) and reference information,
wherein the information about the WebRTC endpoints (1a, 1b) and the reference information comprise an encryption key, a cipher suite and a Synchronization Source, SSRC, identifier;
reading means for reading at least one audio stream from at least one previously captured SRTP traffic file,
wherein the at least one previously captured SRTP traffic file containing the at least one audio stream is captured from at least one previous WebRTC audio media call;
parsing means (2) for parsing the information about the WebRTC endpoints (1a, 1b) and the reference information;
filtering means (3) for receiving the traffic and for filtering the SRTP stream from the traffic,
wherein the filtering means (3) is configured to filter the SRTP stream according to the SSRC identifier obtained from the information about the WebRTC endpoints (1a, 1b) and the reference information and according to a simulation of behavior of a jitter buffer of the WebRTC receiving endpoint (1b) of the at least two WebRTC endpoints (1a, 1b);
decryption means (4) for performing SRTP decryption with the encryption key and the cipher suite in order to generate decrypted Real-Time Transport Protocol, RTP, packets;
extracting means (6) for extracting RTP payload from the decrypted RTP packets,
wherein the RTP payload contains an encoded, degraded audio signal;
decoding means (7) for decoding the encoded, degraded audio signal,
wherein the decoding means (7) comprises an audio decoder configured to produce decoded Pulse Code Modulation, PCM, -audio streams;
preparing means (8) for preparing the decoded PCM audio streams according to requirements of an objective audio quality assessment method,
wherein the preparing means (8) is configured to split the decoded PCM audio streams into multiple decoded PCM audio samples;
output means for outputting at least one decoded PCM audio sample of the multiple decoded PCM audio samples in a file format,
wherein the file format is appropriate to the requirements of the objective audio quality assessment method.

2. The acquiring means according to claim 1, wherein the filtering means (3) is configured to receive traffic from the at least one network element different from the WebRTC endpoints (1a, 1b).

3. The acquiring means according to claim 1 or 2, wherein the filtering means (3) is configured to receive the traffic from a capturing tool in the receiving WebRTC endpoint (1b).

4. The acquiring means according to any one of claims 1 to 3, wherein the behavior of the jitter buffer comprises behavior of packet reordering and/or packet timeout and/or playout behavior.

5. The acquiring means according to any one of claims 1 to 4, wherein the preparing means (8) is configured to split the decoded PCM audio streams such that a length of each of the at least one degraded PCM audio sample corresponds to a length of a reference audio file being sent from the sending end point.

6. System for acquiring files containing degraded audio signals from a Secure Real-Time Transport Protocol, SRTP, -stream, the files being acquired for an objective audio quality assessment method;
the system comprising:
at least two end points,
wherein the at least two endpoints are network elements of a network,
wherein the endpoints are configured to be used as WebRTC end points (1a, 1b),
wherein the endpoints are configured to transmit traffic, comprising SRTP streams, during a successfully established Web Real-Time Communication, WebRTC, audio media call,
wherein the SRTP streams are transmitted via a WebRTC audio media
transmission path (T) between a sending endpoint of the at least two endpoints and a
receiving endpoint of the at least two endpoints;
at least one further network element (11),
wherein the at least one further network element (11) is configured to transmit the
SRTP stream of the WebRTC audio media call,
wherein the at least one further network element (11) is located at the WebRTC
audio media transmission path (T);
the system comprising acquiring means, the acquiring means comprising:
receiving means for receiving information about the endpoints and reference information,
wherein the information about the endpoints and the reference information comprise an encryption key, a cipher suite and a Synchronization Source, SSRC, identifier;
reading means for reading at least one previously captured audio stream,
wherein the at least one previously captured audio stream is captured from at least one previous WebRTC audio media call;
parsing means (2) for parsing the information about the endpoints and the reference information;
filtering means (3) for receiving the traffic and for filtering the SRTP stream from the traffic,
wherein the filtering means (3) is configured to filter the SRTP stream according to the SSRC identifier obtained from the information about the endpoints and the reference information, and according to a simulation of behavior of a jitter buffer of the receiving endpoint;
decryption means (4) for performing SRTP decryption with the encryption key and the cipher suite in order to generate decrypted Real-Time Transport Protocol, RTP, packets;
extracting means (6) for extracting RTP payload from the decrypted RTP packets,
wherein the RTP payload contains an encoded, degraded audio signal;
decoding means (7) for decoding the encoded, degraded audio signal,
wherein the decoding means (7) comprises an audio decoder configured to produce decoded Pulse Code Modulation, PCM, audio streams;
preparing means (8) for preparing the decoded PCM audio streams according to requirements of an objective audio quality assessment method,
wherein the preparing means (8) is configured to split the decoded PCM audio streams into multiple decoded PCM audio samples;
output means for outputting at least one decoded PCM audio sample of the multiple decoded PCM audio samples in a file format,
wherein the file format is appropriate to the requirements of the objective audio quality assessment method.

7. The system according to claim 6, comprising the features of any of claims 2 to 5.

8. Method for acquiring files containing degraded audio signals from a Secure Real-Time Transport Protocol, SRTP, stream, the files being acquired for an objective audio quality assessment method,
wherein traffic with the SRTP stream is transmitted during a successfully established Web Real-Time Communication, WebRTC, audio media call between at least two WebRTC endpoints (1a, 1b),
wherein the at least two WebRTC endpoints (1a, 1b) are network elements of a network,
wherein the SRTP stream is transmitted via a WebRTC audio media transmission path (T) between a sending endpoint of the at least two WebRTC endpoints (1a, 1b) and a receiving endpoint of the at least two WebRTC endpoints (1a, 1b),
wherein the traffic is transmitted by at least one further network element (11) different from the WebRTC endpoints (1a, 1b) via the WebRTC audio media transmission path (T),
wherein the at least one further network element (11) is located at the WebRTC audio media transmission path (T);
the method comprising:
receiving information about the WebRTC endpoints (1a, 1b) and reference information,
wherein the information about the WebRTC endpoints (1a, 1b) and the reference information comprise an encryption key, a cipher suite and a Synchronization Source, SSRC, identifier;
reading at least one audio stream from at least one previously captured SRTP traffic file,
wherein the at least one previously captured SRTP traffic file containing the at least one audio stream is captured from at least one previous WebRTC audio media call;
parsing the information about the WebRTC endpoints (1a, 1b) and the reference information;
receiving the traffic and filtering the SRTP stream from the traffic,
wherein the filtering comprises filtering the SRTP stream according to the SSRC identifier obtained from the information about the WebRTC endpoints (1a, 1b) and the reference information, and according to a simulation of behavior of a jitter buffer of the WebRTC receiving endpoint (1b) of the at least two WebRTC endpoints (1a, 1b);
performing SRTP decryption with the encryption key and the cipher suite in order to generate decrypted Real-Time Transport Protocol, RTP, packets;
extracting RTP payload from the decrypted RTP packets,
wherein the RTP payload contains an encoded, degraded audio signal;
decoding the encoded, degraded audio signal,
wherein decoding comprises producing decoded Pulse Code Modulation, PCM, audio streams;
preparing the decoded PCM audio streams according to requirements of an objective audio quality assessment method,
wherein the preparing comprises splitting the decoded PCM audio streams into multiple decoded PCM audio samples;
outputting at least one decoded PCM audio sample of the multiple decoded PCM audio samples in a file format,
wherein the file format is appropriate to the requirements of the objective audio quality assessment method.

9. The method according to claim 8, wherein the traffic is received from the at least one network element different from the WebRTC endpoints (1a, 1b).

10. The method according to claim 8 or 9, wherein the traffic is received from a capturing tool in the receiving WebRTC endpoint (1b).

11. The method according to any one of claims 8 to 10, wherein the behavior of the jitter buffer comprises behavior of packet reordering and/or packet timeout and/or playout behavior.

12. The method according to any one of claims 8 to 11, wherein the decoded PCM audio streams is split such that a length of each of the at least one degraded PCM audio sample corresponds to a length of a reference audio file being sent from the sending end point.

13. The method according to any one of claims 8 to 12, wherein the acquired SRTP stream is sent from a WebRTC sending endpoint (1a) of the at least two WebRTC endpoints (1a, 1b) at a point of time T1 at at least one position of the network which is between the WebRTC end points (1a, 1b), and wherein particularly the at least one position in the network is a network node.

14. The method according to any one of claims 8 to 13, wherein the acquired SRTP stream is sent from a WebRTC sending endpoint (1a) of the at least two WebRTC endpoints (1a, 1b) at a point of time T1 at the WebRTC receiving endpoint (1b).

## Patentansprüche

1. Erfassungsmittel zum Erfassen von Dateien, die beeinträchtigte Audiosignale enthalten, aus einem sicheren Echtzeit-Transportprotokoll, SRTP, -Strom, wobei die Dateien für ein Verfahren zur objektiven Bewertung der Audioqualität erfasst werden,
wobei der Verkehr mit dem SRTP-Strom während eines erfolgreich aufgebauten Web-Echtzeitkommunikations-, WebRTC, Audiomedienanrufs zwischen mindestens zwei WebRTC-Endpunkten (1a, 1b) übertragen wird,
wobei die mindestens zwei WebRTC-Endpunkte (1a, 1b) Netzwerkelemente eines Netzwerks sind,
wobei der SRTP-Strom über einen WebRTC-Audiomedien-Übertragungsweg (T) zwischen einem Sendeendpunkt der mindestens zwei WebRTC-Endpunkte (1a, 1b) und einem Empfangsendpunkt der mindestens zwei WebRTC-Endpunkte (1a, 1b) übertragen wird;
wobei es mindestens ein weiteres Netzwerkelement (11) gibt, das sich von den WebRTC-Endpunkten (1a, 1b) unterscheidet,
wobei das mindestens eine weitere Netzwerkelement (11) im WebRTC-Audiomedien-Übertragungsweg (T) angeordnet ist,
wobei der Verkehr durch das mindestens eine weitere Netzwerkelement (11) über den WebRTC-Audiomedien-Übertragungsweg (T) übertragen wird;
wobei das Erfassungsmittel aufweist:
ein Empfangsmittel zum Empfangen von Informationen über die WebRTC-Endpunkte (1a, 1b) und von Bezugsinformationen,
wobei die Informationen über die WebRTC-Endpunkte (1a, 1b) und die Bezugsinformationen einen Verschlüsselungsschlüssel, eine Chiffrierfolge und eine Synchronisationsquellen-, SSRC, Kennung aufweisen;
ein Lesemittel zum Lesen von mindestens einem Audiostrom aus mindestens einer vorher aufgenommenen SRTP-Verkehrsdatei,
wobei die mindestens eine vorher aufgenommene SRTP-Verkehrsdatei, die den mindestens einen Audiostrom enthält, aus mindestens einem vorhergehenden WebRTC-Audiomedienanruf aufgenommen ist;
Analysemittel (2) zum Analysieren der Informationen über die WebRTC-Endpunkte (1a, 1b) und der Bezugsinformationen;
ein Filtermittel (3) zum Empfangen des Verkehrs und zum Filtern des SRTP-Stroms aus dem Verkehr,
wobei das Filtermittel (3) konfiguriert ist, den SRTP-Strom gemäß der SSRC-Kennung, die aus den Informationen über die WebRTC-Endpunkte (1a, 1b) und den Bezugsinformationen erhalten wird, und gemäß einer Simulation des Verhaltens eines Jitter-Puffers des WebRTC-Empfangsendpunkts (1b) der mindestens zwei WebRTC-Endpunkte (1a, 1b) zu filtern;
ein Verschlüsselungsmittel (4) zum Durchführen einer SRTP-Verschlüsselung mit dem Verschlüsselungsschlüssel und der Chiffrierfolge, um verschlüsselte Echtzeit-Transportprotokoll, RTP, Pakete zu erzeugen;
ein Extraktionsmittel (6) zum Extrahieren von RTP-Nutzdaten aus den verschlüsselten RTP-Paketen,
wobei die RTP-Nutzdaten ein codiertes, beeinträchtigtes Audiosignal enthalten;
ein Decodierungsmittel (7) zum Decodieren des codierten, beeinträchtigten Audiosignals,
wobei das Decodierungsmittel (7) einen Audiodecoder aufweist, der konfiguriert ist, decodierte Pulscodemodulation, PCM, -Audioströme zu erzeugen;
ein Vorbereitungsmittel (8) zum Vorbereiten der decodierten PCM-Audioströme gemäß den Anforderungen eines Verfahrens zur objektiven Bewertung der Audioqualität,
wobei das Vorbereitungsmittel (8) konfiguriert ist, die decodierten PCM-Audioströme in mehrere decodierte PCM-Audioabtastwerte aufzuteilen;
ein Ausgabemittel zum Ausgeben von mindestens einem decodierten PCM-Audioabtastwert der mehreren decodierten PCM-Audioabtastwerte in einem Dateiformat,
wobei das Dateiformat für die Anforderungen des Verfahrens zur objektiven Bewertung der Audioqualität geeignet ist.

2. Erfassungsmittel nach Anspruch 1, wobei das Filtermittel (3) konfiguriert ist, den Verkehr von dem mindestens einen Netzwerkelement zu empfangen, das sich von den WebRTC-Endpunkten (1a, 1b) unterscheidet.

3. Erfassungsmittel nach Anspruch 1 oder 2, wobei das Filtermittel (3) konfiguriert ist, den Verkehr von einem Aufnahmewerkzeug im Empfangs-WebRTC-Endpunkt (1b) zu empfangen.

4. Erfassungsmittel nach einem der Ansprüche 1 bis 3, wobei das Verhalten des Jitter-Puffers das Verhalten der Paketneuordnung und/oder Paketzeitüberschreitung und/oder das Ausspielungsverhalten aufweist.

5. Erfassungsmittel nach einem der Ansprüche 1 bis 4, wobei das Vorbereitungsmittel (8) konfiguriert ist, die decodierten PCM-Audioströme so aufzuteilen, dass eine Länge von jedem des mindestens einen beeinträchtigten PCM-Audioabtastwerts einer Länge einer Bezugsaudiodatei entspricht, die vom Sendeendpunkt gesendet wird.

6. System zum Erfassen von Dateien, die beeinträchtigte Audiosignale enthalten, aus einem sicheren Echtzeit-Transportprotokoll, SRTP, -Strom, wobei die Dateien für ein Verfahren zur objektiven Bewertung der Audioqualität erfasst werden;
wobei das System aufweist:
mindestens zwei Endpunkte,
wobei die mindestens zwei Endpunkte Netzwerkelemente eines Netzwerks sind,
wobei die Endpunkte konfiguriert sind, als WebRTC-Endpunkte (1a, 1b) verwendet zu werden,
wobei die Endpunkte konfiguriert sind, Verkehr, der SRTP-Ströme aufweist, während eines erfolgreich aufgebauten Web-Echtzeitkommunikation, WebRTC, Audiomedienanrufs zu übertragen,
wobei die SRTP-Ströme über einen WebRTC-Audiomedien-Übertragungsweg (T) zwischen einem Sendeendpunkt der mindestens zwei Endpunkte und einem Empfangsendpunkt der mindestens zwei Endpunkte übertragen werden;
mindestens ein weiteres Netzwerkelement (11),
wobei das mindestens eine weitere Netzwerkelement (11) konfiguriert ist, den SRTP-Strom des WebRTC-Audiomedienanrufs zu übertragen,
wobei das mindestens eine weitere Netzwerkelement (11) im WebRTC-Audiomedien-Übertragungsweg (T) angeordnet ist;
wobei das System ein Erfassungsmittel aufweist, wobei das Erfassungsmittel aufweist:
ein Empfangsmittel zum Empfangen von Informationen über die Endpunkte und von Bezugsinformationen,
wobei die Informationen über die Endpunkte und die Bezugsinformationen einen Verschlüsselungsschlüssel, eine Chiffrierfolge und eine Synchronisationsquellen-, SSRC, Kennung aufweisen;
ein Lesemittel zum Lesen von mindestens einem vorher aufgenommenen Audiostrom,
wobei der mindestens eine vorher aufgenommene Audiostrom aus mindestens einem vorhergehenden WebRTC-Audiomedienanruf aufgenommen ist;
ein Analysemittel (2) zum Analysieren der Informationen über die Endpunkte und die Bezugsinformationen;
Filtermittel (3) zum Empfangen des Verkehrs und zum Filtern des SRTP-Stroms aus dem Verkehr,
wobei das Filtermittel (3) konfiguriert ist, den SRTP-Strom gemäß der SSRC-Kennung, die aus den Informationen über die Endpunkte und den Bezugsinformationen erhalten wird, und gemäß einer Simulation des Verhaltens eines Jitter-Puffers des Empfangsendpunkts zu filtern;
ein Verschlüsselungsmittel (4) zum Durchführen einer SRTP-Verschlüsselung mit dem Verschlüsselungsschlüssel und der Chiffrierfolge, um verschlüsselte Echtzeit-Transportprotokoll, RTP, Pakete zu erzeugen;
ein Extraktionsmittel (6) zum Extrahieren von RTP-Nutzdaten aus den verschlüsselten RTP-Paketen,
wobei die RTP-Nutzdaten ein codiertes, beeinträchtigtes Audiosignal enthalten;
Decodierungsmittel (7) zum Decodieren des codierten, beeinträchtigten Audiosignals,
wobei das Decodierungsmittel (7) einen Audiodecoder aufweist, der konfiguriert ist, decodierte Pulscodemodulation, PCM, Audioströme zu erzeugen;
ein Vorbereitungsmittel (8) zum Vorbereiten der decodierten PCM-Audioströme gemäß den Anforderungen eines Verfahrens zur objektiven Bewertung der Audioqualität,
wobei das Vorbereitungsmittel (8) konfiguriert ist, die decodierten PCM-Audioströme in mehrere decodierte PCM-Audioabtastwerte aufzuteilen;
ein Ausgabemittel zum Ausgeben von mindestens einem decodierten PCM-Audioabtastwert der mehreren decodierten PCM-Audioabtastwerte in einem Dateiformat,
wobei das Dateiformat für die Anforderungen des Verfahrens zur objektiven Bewertung der Audioqualität geeignet ist.

7. System nach Anspruch 6, das die Merkmale der Ansprüche 2 bis 5 aufweist.

8. Verfahren zum Erfassen von Dateien, die beeinträchtigte Audiosignale enthalten, aus einem sicheren Echtzeit-Transportprotokoll, SRTP, -Strom, wobei die Dateien für ein Verfahren zur objektiven Bewertung der Audioqualität erfasst werden,
wobei ein Verkehr mit dem SRTP-Strom während eines erfolgreich aufgebauten Web-Echtzeitkommunikation, WebRTC, Audiomedienanrufs zwischen mindestens zwei WebRTC-Endpunkten (1a, 1b) übertragen wird,
wobei die mindestens zwei WebRTC-Endpunkte (1a, 1b) Netzwerkelemente eines Netzwerks sind,
wobei der SRTP-Strom über einen WebRTC-Audiomedien-Übertragungsweg (T) zwischen einem Sendeendpunkt der mindestens zwei WebRTC-Endpunkte (1a, 1b) und einem Empfangsendpunkt der mindestens zwei WebRTC-Endpunkte (1a, 1b) übertragen wird,
wobei der Verkehr durch mindestens ein weiteres Netzwerkelement (11), das sich von den WebRTC-Endpunkten (1a, 1b) unterscheidet, über den WebRTC-Audiomedien-Übertragungsweg (T) übertragen wird,
wobei das mindestens eine weitere Netzwerkelement (11) im WebRTC-Audiomedien-Übertragungsweg (T) angeordnet ist;
wobei das Verfahren aufweist:
Empfangen von Informationen über die WebRTC-Endpunkte (1a, 1b) und von Bezugsinformationen,
wobei die Informationen über die WebRTC-Endpunkte (1a, 1b) und die Bezugsinformationen einen Verschlüsselungsschlüssel, eine Chiffrierfolge und eine Synchronisationsquellen-, SSRC, Kennung aufweisen;
Lesen von mindestens einem Audiostrom aus mindestens einer vorher aufgenommenen SRTP-Verkehrsdatei,
wobei die mindestens eine vorher aufgenommene SRTP-Verkehrsdatei, die den mindestens einen Audiostrom enthält, aus mindestens einem vorhergehenden WebRTC-Audiomedienanruf aufgenommen ist;
Analysieren der Informationen über die WebRTC-Endpunkte (1a, 1b) und der Bezugsinformationen;
Empfangen des Verkehrs und Filtern des SRTP-Stroms aus dem Verkehr,
wobei das Filtern das Filtern des SRTP-Stroms gemäß der SSRC-Kennung, die aus den Informationen über die WebRTC-Endpunkte (1a, 1b) und den Bezugsinformationen erhalten wird, und gemäß einer Simulation des Verhaltens eines Jitter-Puffers des WebRTC-Empfangsendpunkts (1b) der mindestens zwei WebRTC-Endpunkte (1a, 1b) aufweist;
Durchführen einer SRTP-Verschlüsselung mit dem Verschlüsselungsschlüssel und der Chiffrierfolge, um verschlüsselte Echtzeit-Transportprotokoll, RTP, Pakete zu erzeugen;
Extrahieren der RTP-Nutzdaten aus den verschlüsselten RTP-Paketen, wobei die RTP-Nutzdaten ein codiertes, beeinträchtigtes Audiosignal enthalten;
Decodieren des codierten, beeinträchtigten Audiosignals, wobei das Decodieren das Erzeugen von decodierten Pulscodemodulation, PCM, Audioströmen aufweist;
Vorbereiten der decodierten PCM-Audioströme gemäß den Anforderungen eines Verfahrens zur objektiven Bewertung der Audioqualität, wobei das Vorbereiten das Aufteilen der decodierten PCM-Audioströme in mehrere decodierte PCM-Audioabtastwerte aufweist;
Ausgeben von mindestens einem decodierten PCM-Audioabtastwert der mehreren decodierten PCM-Audioabtastwerte in einem Dateiformat,
wobei das Dateiformat für die Anforderungen des Verfahrens zur objektiven Bewertung der Audioqualität geeignet ist.

9. Verfahren nach Anspruch 8, wobei der Verkehr von dem mindestens einen Netzwerkelement empfangen wird, das sich von den WebRTC-Endpunkten (1a, 1b) unterscheidet.

10. Verfahren nach Anspruch 8 oder 9, wobei der Verkehr von einem Aufnahmewerkzeug im Empfangs-WebRTC-Endpunkt (1b) empfangen wird.

11. Verfahren nach einem der Ansprüche 8 bis 10, wobei das Verhalten des Jitter-Puffers das Verhalten der Paketneuordnung und/oder Paketzeitüberschreitung und/oder das Ausspielungsverhalten aufweist.

12. Verfahren nach einem der Ansprüche 8 bis 11, wobei die decodierten PCM-Audioströme so aufgeteilt werden, dass eine Länge von jedem des mindestens einen beeinträchtigten PCM-Audioabtastwerts einer Länge einer Bezugsaudiodatei entspricht, die vom Sendeendpunkt gesendet wird.

13. Verfahren nach einem der Ansprüche 8 bis 12, wobei der erfasste SRTP-Strom von einem WebRTC-Sendeendpunkt (1a) der mindestens zwei WebRTC-Endpunkte (1a, 1b) zu einem Zeitpunkt T1 an mindestens einer Position des Netzwerks gesendet wird, die sich zwischen den WebRTC-Endpunkten (1a, 1b) befindet, und wobei insbesondere die mindestens eine Position im Netzwerk ein Netzwerkknoten ist.

14. Verfahren nach einem der Ansprüche 8 bis 13, wobei der erfasste SRTP-Strom von einem WebRTC-Sendeendpunkt (la) der mindestens zwei WebRTC-Endpunkte (1a, 1b) zu einem Zeitpunkt T1 am WebRTC-Empfangsendpunkt (1b) gesendet wird.

## Revendications

1. Moyen d'acquisition, pour l'acquisition de fichiers contenant des signaux audio dégradés à partir d'un flux de protocole de transport en temps réel sécurisé SRTP, lesdits fichiers étant acquis pour un procédé d'évaluation objective de la qualité audio,
où le trafic avec le flux SRTP est transmis pendant un appel de support audio de communication Web en temps réel WebRTC, établi avec succès entre au moins deux points d'extrémité WebRTC (1a, 1b),
où les au moins deux points d'extrémité WebRTC (1a, 1b) sont des éléments d'un réseau,
où le flux SRTP est transmis via un chemin de transmission de support audio WebRTC (T) entre un point d'extrémité d'émission des au moins deux points d'extrémité WebRTC (1a, 1b) et un point d'extrémité de réception des au moins deux points d'extrémité WebRTC (1a, 1b);
au moins un autre élément de réseau (11) différent des points d'extrémité WebRTC (1a, 1b),
où ledit au moins un autre élément de réseau (11) est situé sur le chemin de transmission de support audio WebRTC (T),
où le trafic est transmis par ledit au moins un autre élément de réseau (11) via le chemin de transmission de support audio WebRTC (T) ;
ledit moyen d'acquisition comprenant :
un moyen de réception, pour la réception d'informations sur les points d'extrémité WebRTC (1a, 1b) et d'informations de référence,
où les informations sur les points d'extrémité WebRTC (1a, 1b) et les informations de référence comprennent une clé de cryptage, une suite de chiffrement et un identifiant de source de synchronisation SSRC ;
un moyen de lecture pour la lecture d'au moins un flux audio d'au moins un fichier de trafic SRTP précédemment capturé,
où ledit au moins un fichier de trafic SRTP précédemment capturé contenant ledit au moins un flux audio est capturé à partir d'au moins un appel de support audio WebRTC précédent ;
un moyen d'analyse (2) pour analyser les informations sur les points d'extrémité WebRTC (1a, 1b) et les informations de référence ;
un moyen de filtrage (3) pour la réception du trafic et pour le filtrage du flux SRTP du trafic,
où le moyen de filtrage (3) est prévu pour filtrer le flux SRTP en fonction de l'identifiant SSRC obtenu à partir des informations sur les points d'extrémité WebRTC (1a, 1b) et des informations de référence et en fonction d'une simulation du comportement d'un tampon de gigue du point d'extrémité de réception WebRTC (1b) des au moins deux points d'extrémité WebRTC (1a, 1b);
un moyen de décryptage (4) pour l'exécution d'un décryptage SRTP avec la clé de cryptage et la suite de chiffrement afin de générer des paquets de protocole de transmission en temps réel RTP décryptés ;
un moyen d'extraction (6) pour l'extraction d'une charge utile RTP des paquets RTP décryptés,
où la charge utile RTP contient un signal audio dégradé codé ;
un moyen de décodage (7) pour le décodage du signal audio dégradé codé,
où le moyen de décodage (7) comprend un décodeur audio prévu pour produire des flux audio décodés par modulation par impulsions et codage PCM ;
un moyen de préparation (8) pour la préparation des flux audio décodés par PCM en fonction d'exigences d'un procédé d'évaluation objective de la qualité audio,
où le moyen de préparation (8) est prévu pour diviser les flux audio décodés par PCM en plusieurs échantillons audio décodés par PCM ;
un moyen d'édition pour éditer dans un format de fichier au moins un échantillon audio décodé par PCM des plusieurs échantillons audio décodés par PCM,
le format de fichier étant adapté aux exigences du procédé d'évaluation objective de la qualité audio.

2. Moyen d'acquisition selon la revendication 1, où le moyen de filtrage (3) est prévu pour recevoir le trafic dudit au moins un élément de réseau différent des points d'extrémité WebRTC (1a, 1b).

3. Moyen d'acquisition selon la revendication 1 ou la revendication 2, où le moyen de filtrage (3) est prévu pour recevoir le trafic d'un outil de capture dans le point d'extrémité de réception WebRTC (1b).

4. Moyen d'acquisition selon l'une des revendications 1 à 3, où le comportement du tampon de gigue comprend le comportement de réorganisation des paquets et/ou de temporisation de paquets et/ou le comportement de lecture.

5. Moyen d'acquisition selon l'une des revendications 1 à 4, où le moyen de préparation (8) est prévu pour diviser les flux audio décodés par PCM de manière à faire correspondre la longueur de chacun desdits au moins un échantillon audio PCM dégradé avec la longueur d'un fichier audio de référence adressé depuis le point d'extrémité d'émission.

6. Système pour l'acquisition de fichiers contenant des signaux audio dégradés à partir d'un flux de protocole de transport en temps réel sécurisé SRTP, lesdits fichiers étant acquis pour un procédé d'évaluation objective de la qualité audio ;
ledit système comprenant :
au moins deux points d'extrémité,
où les au moins deux points d'extrémité sont des éléments d'un réseau,
où les points d'extrémité sont prévus pour être utilisés comme points d'extrémité WebRTC (1a, 1b),
où les points d'extrémité sont prévus pour transmettre un trafic, comprenant des flux SRTP, pendant un appel de support audio de communication Web en temps réel WebRTC, établi avec succès,
où les flux SRTP sont transmis via un chemin de transmission de support audio WebRTC (T) entre un point d'extrémité d'émission des au moins deux points d'extrémité et un point d'extrémité de réception des au moins deux points d'extrémité ;
au moins un autre élément de réseau (11),
où ledit au moins un autre élément de réseau (11) est prévu pour transmettre le flux SRTP de l'appel de support audio WebRTC,
où ledit au moins un autre élément de réseau (11) est situé sur le chemin de transmission de support audio WebRTC (T) ;
ledit système comprenant un moyen d'acquisition, ledit moyen d'acquisition comprenant :
un moyen de réception pour la réception d'informations sur les points d'extrémité et d'informations de référence,
où les informations sur les points d'extrémité et les informations de référence comprennent une clé de cryptage, une suite de chiffrement et un identifiant de source de synchronisation SSRC ;
un moyen de lecture pour la lecture d'au moins un flux audio précédemment capturé, où ledit au moins un flux audio précédemment capturé est capturé à partir d'au moins un appel de support audio WebRTC précédent ;
un moyen d'analyse (2) pour l'analyse des informations sur les points d'extrémité et des informations de référence ;
un moyen de filtrage (3) pour la réception du trafic et pour le filtrage du flux SRTP du trafic,
où le moyen de filtrage (3) est prévu pour filtrer le flux SRTP en fonction de l'identifiant SSRC obtenu à partir des informations sur les points d'extrémité et des informations de référence, et en fonction d'une simulation du comportement d'un tampon de gigue du point d'extrémité de réception ;
un moyen de décryptage (4) pour l'exécution d'un décryptage SRTP avec la clé de cryptage et la suite de chiffrement afin de générer des paquets de protocole de transmission en temps réel RTP décryptés ;
un moyen d'extraction (6) pour l'extraction d'une charge utile RTP des paquets RTP décryptés,
où la charge utile RTP contient un signal audio dégradé codé ;
un moyen de décodage (7) pour le décodage du signal audio dégradé codé,
où le moyen de décodage (7) comprend un décodeur audio prévu pour produire des flux audio décodés par modulation par impulsions et codage PCM ;
un moyen de préparation (8) pour la préparation des flux audio décodés par PCM en fonction d'exigences d'un procédé d'évaluation objective de la qualité audio,
où le moyen de préparation (8) est prévu pour diviser les flux audio décodés par PCM en plusieurs échantillons audio décodés par PCM ;
un moyen d'édition pour éditer dans un format de fichier au moins un échantillon audio décodé par PCM des plusieurs échantillons audio décodés par PCM,
où le format de fichier est adapté aux exigences du procédé d'évaluation objective de la qualité audio.

7. Système selon la revendication 6, comprenant les caractéristiques de l'une des revendications 2 à 5.

8. Procédé d'acquisition de fichiers contenant des signaux audio dégradés à partir d'un flux de protocole de transport en temps réel sécurisé SRTP, lesdits fichiers étant acquis pour un procédé d'évaluation objective de la qualité audio,
où le trafic avec le flux SRTP est transmis pendant un appel de support audio de communication Web en temps réel WebRTC, établi avec succès entre au moins deux points d'extrémité WebRTC (1a, 1b),
où les au moins deux points d'extrémité WebRTC (1a, 1b) sont des éléments d'un réseau,
où le flux SRTP est transmis via un chemin de transmission de support audio WebRTC (T) entre un point d'extrémité d'émission des au moins deux points d'extrémité WebRTC (1a, 1b) et un point d'extrémité de réception des au moins deux points d'extrémité WebRTC (1a, 1b),
où le trafic est transmis par au moins un autre élément de réseau (11) différent des points d'extrémité WebRTC (1a, 1b) via le chemin de transmission de support audio WebRTC (T),
où ledit au moins un autre élément de réseau (11) est situé sur le chemin de transmission de support audio WebRTC (T) ;
ledit procédé comprenant :
la réception d'informations sur les points d'extrémité WebRTC (1a, 1b) et d'informations de référence,
où les informations sur les points d'extrémité WebRTC (1a, 1b) et les informations de référence comprennent une clé de cryptage, une suite de chiffrement et un identifiant de source de synchronisation SSRC ;
la lecture d'au moins un flux audio d'au moins un fichier de trafic SRTP précédemment capturé,
où ledit au moins un fichier de trafic SRTP précédemment capturé contenant ledit au moins un flux audio est capturé à partir d'au moins un appel de support audio WebRTC où ledit au moins un fichier de trafic SRTP précédemment capturé contenant ledit au moins un flux audio est capturé à partir d'au moins un appel de support audio WebRTC précédent ;
l'analyse des informations sur les points d'extrémité WebRTC (1a, 1b) et des informations de référence ;
la réception du trafic et le filtrage du flux SRTP du trafic,
où le filtrage comprend le filtrage du flux SRTP en fonction de l'identifiant SSRC obtenu à partir des informations sur les points d'extrémité WebRTC (1a, 1b) et des informations de référence, et en fonction d'une simulation du comportement d'un tampon de gigue du point d'extrémité de réception WebRTC (1b) des au moins deux points d'extrémité WebRTC (1a, 1b);
l'exécution d'un décryptage SRTP avec la clé de cryptage et la suite de chiffrement afin de générer des paquets de protocole de transmission en temps réel RTP décryptés ;
l'extraction d'une charge utile RTP des paquets RTP décryptés,
où la charge utile RTP contient un signal audio dégradé codé ;
le décodage du signal audio dégradé codé,
où le décodage comprend la production de flux audio décodés par modulation par impulsions et codage PCM ;
la préparation des flux audio décodés par PCM en fonction d'exigences d'un procédé d'évaluation objective de la qualité audio,
où la préparation comprend la division des flux audio décodés par PCM en plusieurs échantillons audio décodés par PCM ;
l'édition d'au moins un échantillon audio décodé par PCM des plusieurs échantillons audio décodés par PCM dans un format de fichier,
le format de fichier étant adapté aux exigences du procédé d'évaluation objective de la qualité audio.

9. Procédé selon la revendication 8, où le trafic est reçu dudit au moins un élément de réseau différent des points d'extrémité WebRTC (1a, 1b).

10. Procédé selon la revendication 8 ou la revendication 9, où le trafic est reçu d'un outil de capture dans le point d'extrémité de réception WebRTC (1b).

11. Procédé selon l'une des revendications 8 à 10, où le comportement du tampon de gigue comprend le comportement de réorganisation des paquets et/ou de temporisation de paquets et/ou le comportement de lecture.

12. Procédé selon l'une des revendications 8 à 11, où les flux audio décodés par PCM sont divisés de manière à faire correspondre la longueur de chacun desdits au moins un échantillon audio PCM dégradé avec la longueur d'un fichier audio de référence adressé depuis le point d'extrémité d'émission.

13. Procédé selon l'une des revendications 8 à 12, où le flux SRTP acquis est adressé depuis un point d'extrémité d'émission WebRTC (la) des au moins deux points d'extrémité WebRTC (1a, 1b) à un moment T1 sur au moins un emplacement du réseau situé entre les points d'extrémité WebRTC (1a, 1b), et où ledit au moins un emplacement du réseau est en particulier un nœud de réseau.

14. Procédé selon l'une des revendications 8 à 13, où le flux SRTP acquis est adressé depuis un point d'extrémité d'émission WebRTC (la) des au moins deux points d'extrémité WebRTC (1a, 1b) à un moment T1 sur le point d'extrémité de réception WebRTC (1b).
